# FASCICULE DE BREVET EUROPEEN

(11) **EP 2 989 878 B1**
(45) Date de publication et mention de la délivrance du brevet: **15.04.2020**
(21) Numéro de dépôt: 15182163.4
(22) Date de dépôt: 24.08.2015
(51) Int. Cl.: A01C 7/20, A01B 73/06

(54) **MACHINE AGRICOLE AVEC AU MOINS UNE BARRE DE SEMIS ARTICULÉE**
LANDWIRTSCHAFTLICHE MASCHINE MIT MINDESTENS EINER GELENKEIGEN SÄMASCHINE
AGRICULTURAL MACHINE WITH AT LEAST ONE ARTICULATED SEEDER BAR

(30) Priorité: 25.08.2014 FR 1457955
(43) Date de publication de la demande: 02.03.2016
(73) Titulaire: KUHN S.A., 67700 Saverne (FR)
(72) Inventeur: POTIER, Philippe, 67290 Zittersheim (FR); SCHMITT, Guillaume, 67250 Surbourg (FR); CONSTANT, Olivier, 67340 Weiterswiller (FR)
(74) Mandataire: Esch, Esther Evelyne

(56) Documents cités:
- FR-A1- 2 957 221
- US-A- 4 137 852
- US-A- 4 596 290
- US-A- 4 664 202
- US-A1- 2003 110 998
- US-A1- 2005 087 350

## Description

La présente invention se rapporte au domaine technique général du machinisme agricole. L'invention concerne une machine agricole présentant un châssis traîné et une barre transversale en plusieurs sections s'étendant sensiblement transversalement à la direction d'avance en position de travail et s'étendant sensiblement parallèlement à la direction d'avance en position de transport, la barre transversale comporte deux sections repliables autour d'une première articulation respective d'axe sensiblement vertical, chaque section porte un dispositif de semis constitué d'une trémie et d'une barre de semis.

Le document FR 2 871 988 A1 présente une telle machine agricole en deux parties repliables vers l'avant. Cette machine agricole connue est un porte-outil qui permet de combiner des appareils agricoles, tels que des semoirs, pour travailler une largeur de travail plus importante. Chaque semoir est monté sur la barre transversale au moyen d'un attelage trois points conventionnel. Cet attelage trois points conventionnel permet de relever et d'abaisser le semoir. L'utilisation de tels attelages trois points augmente la largeur de la machine agricole dans la configuration de transport puisque chaque section est repliée vers l'avant. Compte tenu de la position des roues du chariot, les semoirs doivent être relevés au-dessus des roues. La stabilité de la machine agricole au transport est donc réduite puisque le centre de gravité est éloigné du sol. L'instabilité est accentuée lorsque les trémies sont pleines.

Sur d'autres machines agricoles connues de grande largeur, il est prévu un dispositif pour permettre un transport en long. La direction de transport est alors perpendiculaire à la direction de travail. Un tel dispositif nécessite, dans la plupart des cas, de dételer le tracteur et de l'atteler dans l'autre position pour pouvoir transporter la machine agricole de grande largeur sur les routes.

Le document US 4 664 202 décrit un châssis repliable traîné pour semoir.

La présente invention a pour but de remédier aux inconvénients précités et vise à proposer une machine agricole de grande largeur plus simple avec un bon suivi de terrain et avec un encombrement au transport réduit.

Conformément à l'invention, la machine agricole est caractérisée en ce que chaque barre de semis est fixée sur la section correspondante au moyen d'une deuxième articulation d'axe sensiblement horizontal et dirigée parallèlement à la direction d'avance en position de travail. Grâce à cette caractéristique, la barre de semis peut suivre le terrain indépendamment de la section correspondante et du châssis traîné.

Selon une autre caractéristique de l'invention, lorsqu'au moins une des sections est disposée parallèlement à la direction d'avance dans la configuration de transport, la barre de semis correspondante s'étend sensiblement parallèlement à la surface du sol. De cette manière, la garde au sol de la machine agricole est augmentée sans modification de la position en hauteur du centre de gravité.

Selon une caractéristique de l'invention, la deuxième articulation est décalée latéralement par rapport à la position du centre de gravité de la barre de semis. Ainsi, la barre de semis est alignée automatiquement avec le sol au transport et au moins une des extrémités de la barre de semis est dégagée du sol pour éviter un contact avec le sol lors des manœuvres de demi-tours en bout de champ.

D'autres caractéristiques et avantages de l'invention se dégageront de la description qui suit en regard des dessins annexés qui ne sont donnés qu'à titre d'exemples non limitatifs de l'invention. Sur ces dessins :
- la **figure 1** est une vue de dessus d'une machine agricole selon l'invention, dans une configuration de travail,
- la **figure 2** est une vue avant de la machine agricole au travail,
- la **figure 3** est une vue latérale de la machine agricole au transport.

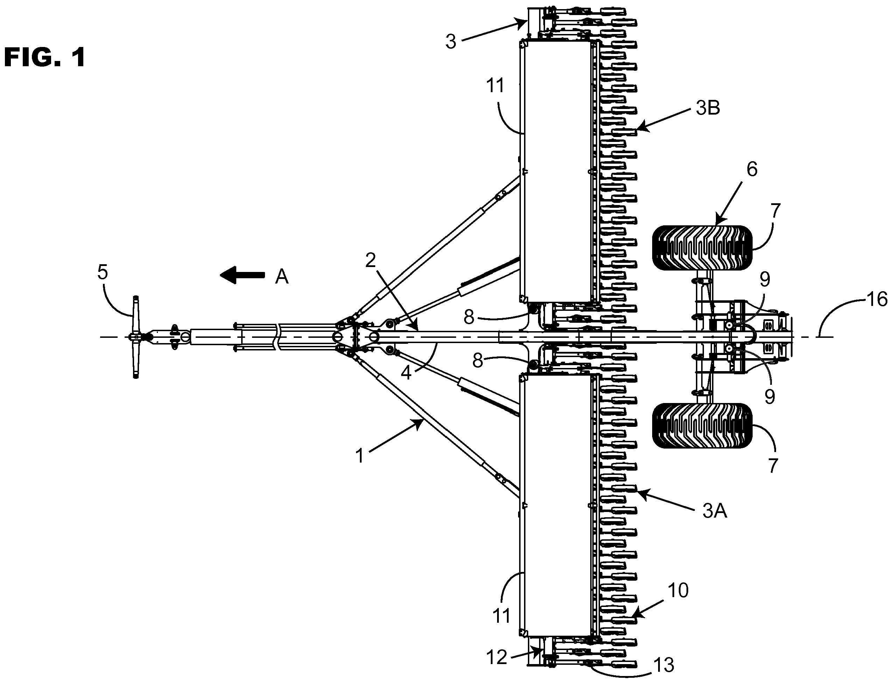

La machine agricole (1) selon l'invention comporte un châssis (2) traîné et une barre transversale (3) en plusieurs sections pour pouvoir intervenir sur une large bande de travail. Telle que représentée sur la figure 1, la barre transversale (3) présente deux sections (3A, 3B). Le châssis (2) est réalisé sous la forme d'un cadre longitudinal (4) équipé à l'avant d'un système d'attelage (5) et à l'arrière d'un chariot (6). Le système d'attelage (5) est destiné à être accroché à l'attelage d'un tracteur (non représenté). Le tracteur est amené à déplacer et à animer la machine agricole (1) suivant une direction d'avance indiquée par la flèche (A). L'invention concerne ainsi une machine agricole traînée dont le châssis (2) repose sur le sol via les roues (7) du chariot (6). La figure 1 représente la machine agricole dans sa configuration de travail. Une section s'étend à droite et l'autre à gauche du cadre longitudinal (4). Les deux sections (3A, 3B) s'étendent sensiblement transversalement à la direction d'avance (A) dans une configuration de travail. Elles s'étendent dans le prolongement l'une de l'autre et sont sensiblement alignées compte tenu de la direction d'avance (A). Pour réduire la largeur de cette machine agricole (1) lors du transport, les deux sections (3A, 3B) sont repliées pour s'étendre sensiblement parallèlement à la direction d'avance (A). Dans cette position repliée, la largeur de la machine agricole (1) est considérablement réduite puisque chaque section (3A, 3B) est disposée sensiblement parallèlement au cadre longitudinal (4). Dans l'exemple de réalisation, les sections (3A, 3B) sont repliables par pivotement autour d'une première articulation (8) d'axe sensiblement vertical. Le pivotement des sections (3A, 3B) est commandé par des vérins à double effet. Les roues (7) du chariot (6) s'étendent derrière les sections (3A, 3B) et les sections (3A, 3B) pivotent avantageusement vers l'avant. Dans une alternative, les sections (3A, 3B) sont repliées vers l'arrière, lorsque les roues (7) sont disposées devant les sections (3A, 3B).

Afin de s'adapter aux différents travaux à réaliser, la hauteur du châssis (2) est réglable par rapport au chariot (6) au moyen d'au moins un actionneur (9). Dans l'exemple représenté, l'actionneur (9) est réalisé sous la forme d'un vérin, composé d'un cylindre et d'un piston, qui se déplace dans un sens ou dans l'autre sous l'action d'un fluide. L'actionneur (9) est de préférence un vérin du type à double effet. D'une manière avantageuse, deux actionneurs (9) s'étendent entre le chariot (6) et le châssis (2). Ces actionneurs (9) ont pour fonction de soulever ou d'abaisser le châssis (2) de la machine agricole (1).

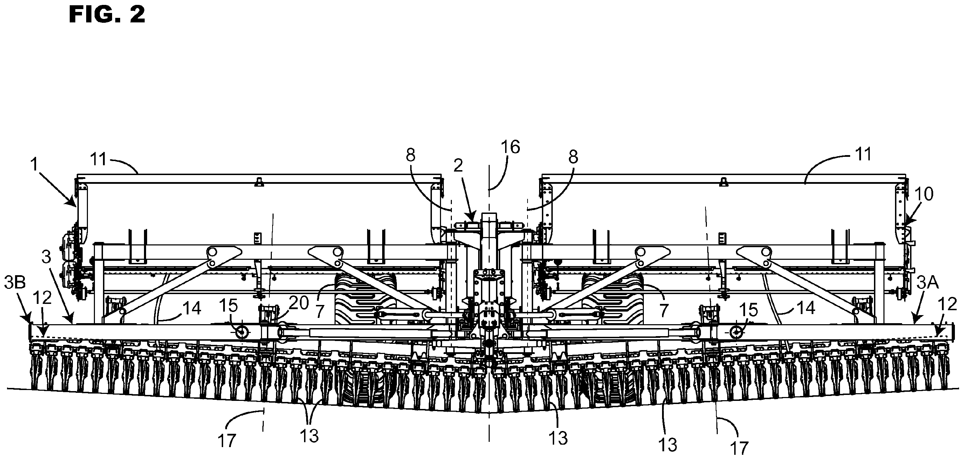

La figure 2 représente une vue avant de la machine agricole (1) dans une position de travail. Chaque section (3A, 3B) porte un dispositif de semis (10) constitué d'une trémie (11) et d'une barre de semis (12). La machine agricole (1) est donc destinée à semer des graines ou des autres produits. La trémie (11) constitue la réserve de graines. Dans la partie inférieure de la trémie (11) se trouve au moins une distribution dont la fonction est d'extraire une quantité déterminée de graines. Le débit de la distribution est adapté en fonction de la vitesse d'avance de la machine agricole (1). Une boîte de vitesses permet de faire varier la vitesse de distribution pour s'adapter aux espèces à semer et à la quantité de grains par hectare. La barre de semis (12) regroupe les organes d'enterrage (13) qui fabriquent des sillons à une profondeur déterminée pour y placer les graines. La profondeur de travail de la barre de semis (12) est réglée grâce aux actionneurs (9). Le réglage souhaité est garanti grâce à des cales montées sur la tige de chaque actionneur (9). Des tuyaux (14) relient les organes d'enterrage (13) à la distribution pour l'acheminement des graines vers le sol. Les tuyaux (14) s'étendent donc entre la trémie (11) et la barre de semis (12). Seulement quelques tuyaux (14) sont représentés sur les figures.

Selon une importante caractéristique de l'invention, chaque barre de semis (12) est fixée sur la section (3A, 3B) correspondant au moyen d'une deuxième articulation (15) d'axe sensiblement horizontal et dirigée parallèlement à la direction d'avance (A) en position de travail. De cette manière, la barre de semis (12) peut suivre le terrain indépendamment de la section correspondante (3A, 3B) et du châssis (2). La barre de semis (12) est indépendante par rapport à la barre transversale (3) de la machine agricole (1). D'une manière particulièrement avantageuse, les trémies (11) sont solidaires de la barre transversale (3). Chaque trémie (11) est montée fixe sur la section (3A, 3B) correspondante, l'intégralité du poids de la trémie (11) est donc supporté par la section (3A, 3B) correspondante. La deuxième articulation (15) ne supporte pas le poids de la trémie (11) correspondante, ainsi son dimensionnement sera plus faible. On remarque également que les sections (3A, 3B) sont dépourvues de roues d'appui au sol et que la barre transversale (3) ne comporte pas d'articulation d'axe horizontal dirigé dans la direction d'avance au travail (A). Le suivi de terrain de la barre de semis (12) se fait uniquement grâce à la deuxième articulation (15). D'après la figure 2, la deuxième articulation (15) est réalisée directement dans la section (3A, 3B) correspondante. La réalisation de l'articulation est relativement simple puisque la section (3A, 3B) est une poutre par exemple creuse à section transversale carrée. Dans une variante, la deuxième articulation (15) est disposée sous la section (3A, 3B) correspondante. Dans une autre variante, la deuxième articulation (15) est disposée sur la section (3A, 3B) correspondante.

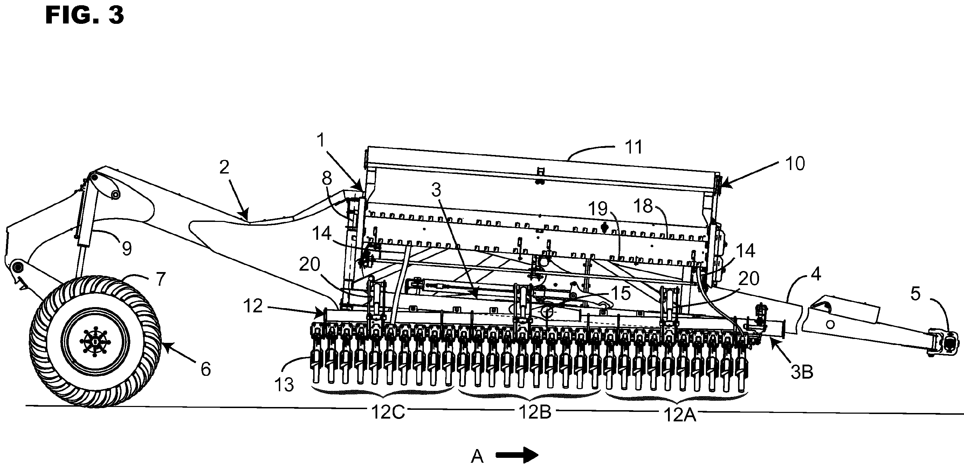

Selon une autre caractéristique, lorsqu'au moins une des sections (3A, 3B) est placée dans la configuration de transport, la barre de semis (12) correspondante s'étend sensiblement parallèlement à la surface du sol. Ainsi, la garde au sol de la barre de semis (12) est sensiblement identique à ses deux extrémités. La figure 3 représente la machine agricole (1) selon une vue latérale dans la configuration de transport. La deuxième articulation (15) est avantageusement placée dans le voisinage du centre de gravité de la barre de semis (12). La deuxième articulation (15) est donc éloignée du plan vertical médian (16). Une telle position de la deuxième articulation (15) permet d'avoir une barre de semis (12) plus ou moins équilibrée. S'agissant d'un dispositif de semis (10), il est nécessaire que la profondeur de semis soit respectée et soit constante de part et d'autre de la barre de semis (12). Généralement, les organes d'enterrage (13) reposent sur le sol avec une pression prédéterminée ou doivent travailler le sol à une profondeur déterminée pour assurer une bonne germination des graines et une levée homogène des plants. Grâce à cette deuxième articulation (15), la barre de semis (12) est maintenue sensiblement parallèle à la surface du sol. Ainsi le dégagement de la barre de semis (12) du sol est sensiblement identique pour chacune des extrémités de la barre de semis (12). Ceci est un avantage lors du transport et lors des manœuvres de demi-tours en fin de champ de la machine agricole (1). D'une manière avantageuse, le pivotement de la barre de semis (12) autour de la deuxième articulation (15) est libre. Le pivotement est libre en position de travail et en position de transport. Comme la barre de semis (12) pivote autour de la deuxième articulation (15), la barre de semis (12) est susceptible de s'éloigner plus ou moins de la trémie (11) au niveau de ses extrémités. Ainsi, les tuyaux (14) reliant la distribution aux organes d'enterrage (13) doivent pouvoir absorber la différence de longueur. Les tuyaux (14) sont donc configurer pour absorber les différentes positions de la barre de semis (12) lors du travail et notamment les variations de longueur. Dans l'exemple de réalisation, les tuyaux (14) sont télescopiques. Dans une alternative, les tuyaux (14) sont flexibles.

Selon une autre importante caractéristique de l'invention, la deuxième articulation (15) est décalée latéralement par rapport à la position du centre de gravité de la barre de semis (12). Grâce à la position décentrée de la deuxième articulation (15) par rapport à la barre de semis (12), la barre de semis (12) s'aligne automatiquement à la surface du sol lorsque les sections (3A, 3B) sont repliées pour le transport. D'une manière particulièrement avantageuse, la deuxième articulation (15) s'étend entre le plan vertical (17) passant par le centre de gravité de la barre de semis (12) et l'extrémité extérieure de la barre de semis (12). Avec ce décalage latéral de la deuxième articulation (15) dans la moitié extérieure de la barre de semis (12), l'extrémité extérieure de la barre de semis (12) est relevée automatiquement pour les manœuvres de demi-tour en bout de champ. On évite ainsi que les extrémités extérieures entre en contact avec le sol lorsque le châssis (2) de la machine agricole (1) bouge. Dans l'exemple de réalisation représenté sur les figures, la deuxième articulation (15) est réalisée directement dans la section (3A, 3B) correspondante. On constate également que la machine agricole (1) est symétrique par rapport au plan vertical médian (16). Dans une alternative non représentée, la deuxième articulation (15) s'étend entre le plan vertical médian (16) de la machine agricole (1) et le plan vertical (17) passant par le centre de gravité de la barre de semis (12). Ce décalage latéral de la deuxième articulation (15) dans la moitié intérieure de la barre de semis (12) permet de relever l'extrémité intérieure de la barre de semis (12) automatiquement.

La figure 3 représente la machine agricole (1) de grande largeur en position de transport et notamment la section droite (3B) de la barre transversale (3). La barre de semis (12) de cette section (3B) présente une largeur de travail importante, de plus de trois mètres. On remarque que la largeur de la barre de semis (12) est plus importante que celle de la trémie (11). Pour améliorer davantage l'adaptation au terrain et le suivi du sol, la barre de semis (12) est divisée en au moins deux tronçons (12A, 12B, 12C). Chaque tronçon (12A, 12B, 12C) est monté par l'intermédiaire d'un vérin (20) respectif. Il s'agit d'un vérin hydraulique. Le vérin (20) est combiné à un dispositif oléopneumatique dont la pression est réglable. Le réglage de cette pression permet de modifier l'effort de terrage des organes d'enterrage (13). Ce dispositif oléopneumatique permet d'une part au tronçon (12A, 12B, 12C) correspondant de s'adapter plus précisément au sol et d'autre part au tronçon (12A, 12B, 12C) de se dégager du sol quand il rencontre un obstacle sur le sol. Un tel montage par tronçon (12A, 12B, 12C) contribue à un semis de qualité avec une profondeur respectée. Dans l'exemple représenté, la barre de semis (12) comporte trois tronçons (12A, 12B, 12C) indépendants et trois vérins (20).

La machine agricole (1) selon l'invention est capable de semer simultanément de l'engrais et de la semence. Pour cela, chaque trémie (11) est divisée en deux réservoirs distincts. Les réservoirs sont séparés par une paroi. La position de la paroi est avantageusement réglable dans la trémie (11). Chaque réservoir est muni d'une distribution (18, 19) respective. Ces distributions (18, 19) sont avantageusement superposées, elles sont représentées schématiquement sur la figure 3. La distribution pour l'engrais (18) s'étend sensiblement au-dessus de la distribution pour la semence (19). En sortie de distribution, l'engrais et la semence sont dirigés vers le sol au travers d'un même tuyau. La machine agricole (1) représentée est un semoir avec une double distribution. Selon les figures, le dispositif de semis (10) est un semoir à distribution mécanique. Généralement, la largeur de la trémie (11) pour un semoir mécanique est sensiblement égale à la largeur semée. Sur la machine agricole (1) selon l'invention, on peut voir que la largeur de la barre de semis (12) est plus importante que la largeur de la trémie (11) correspondante. Des organes d'enterrage (13) s'étendent ainsi sous le châssis (2) pour semer dans la zone centrale de la machine agricole (1). D'une manière avantageuse, au moins deux organes d'enterrage (13) sont disposés entre les plans verticaux passant par les premières articulations (8). Au niveau des extrémités extérieures de la barre de semis (12), au moins deux organes d'enterrage (13) sont disposés au-delà de la trémie (11). Les distributions respectives alimentant ces organes d'enterrage supplémentaires sont montées et logées dans l'encombrement en largeur de la trémie (11). La largeur de chaque distribution est compacte ce qui permet d'ajouter au moins deux distributions pour alimenter les organes d'enterrage (13) qui sont ajoutés au moins d'un côté de la trémie (11). Sur la figure 1, trois organes d'enterrage (13) s'étendent au-delà de la largeur de la trémie (11) au niveau des extrémités extérieures de la barre de semis (12) et deux organes d'enterrage (13) s'étendent au-delà de la largeur de la trémie (11) au niveau des extrémités intérieures de la barre de semis (12).

Selon une variante non représentée, le dispositif de semis (10) est un semoir à distribution pneumatique. La distribution se fait alors par au moins un doseur de graines et chaque doseur alimente alors un ou plusieurs rangs par l'intermédiaire de têtes de répartition. La largeur de la distribution est très inférieure à la largeur de la trémie (11).

D'après la figure 3, on remarque que la trémie (11) est inclinée vers l'avant. L'axe vertical de la première articulation (8) correspondante est orienté vers l'avant. Cette inclinaison est engendrée par le fait que le châssis (2) est soulevé via les actionneurs (9) et que le système d'attelage (5) est plus proche du sol. La hauteur par rapport au sol du système d'attelage (5) découle du tracteur utilisé et du réglage en hauteur du système de relevage. Selon la réalisation représentée, les deux sections (3A, 3B) pivotent autour de la première articulation (8) vers l'avant pour arriver dans la position de transport.

Il est bien évident que l'invention n'est pas limitée aux modes de réalisation décrits ci-dessus et représentés sur les dessins annexés. Des modifications restent possibles, notamment en ce qui concerne la constitution ou le nombre des divers éléments ou par substitution d'équivalents techniques, sans pour autant sortir du domaine de protection tel qu'il est défini par les revendications suivantes.

## Revendications

1. Machine agricole (1) présentant un châssis (2) traîné et une barre transversale (3) en plusieurs sections s'étendant sensiblement transversalement à la direction d'avance (A) en position de travail et s'étendant sensiblement parallèlement à la direction d'avance (A) en position de transport, la barre transversale comporte deux sections (3A, 3B) repliables autour d'une première articulation (8) respective d'axe sensiblement vertical, chaque section (3A, 3B) porte un dispositif de semis (10) constitué d'une trémie (11) et d'une barre de semis (12), ***caractérisée en ce que*** chaque barre de semis (12) est fixée sur la section (3A, 3B) correspondant au moyen d'une deuxième articulation (15) d'axe sensiblement horizontal et dirigée parallèlement à la direction d'avance (A) en position de travail, seule la barre de semis (12) est mobile par rapport à la section (3A, 3B) correspondante autour de la deuxième articulation (15).

2. Machine agricole selon la revendication 1, ***caractérisée en ce que*** lorsqu'au moins une des sections (3A, 3B) est placée dans la configuration de transport, la barre de semis (12) correspondante s'étend sensiblement parallèlement à la surface du sol.

3. Machine agricole selon la revendication 1 ou 2, ***caractérisée en ce que*** le pivotement autour de la deuxième articulation (15) est libre en position de travail et en position de transport.

4. Machine agricole selon l'une quelconque des revendications 1 à 3, ***caractérisée en ce que*** la deuxième articulation (15) est décalée latéralement par rapport à la position du centre de gravité de la barre de semis (12).

5. Machine agricole selon l'une quelconque des revendications 1 à 4, ***caractérisée en ce que*** la deuxième articulation (15) s'étend entre le plan vertical (17) passant par le centre de gravité de la barre de semis (12) et l'extrémité extérieure de la barre de semis (12).

6. Machine agricole selon l'une quelconque des revendications 1 à 5, ***caractérisée en ce que*** la deuxième articulation (15) est réalisée directement dans la section (3A, 3B) correspondante.

7. Machine agricole selon l'une quelconque des revendications 1 à 6, ***caractérisée en ce que*** la trémie (11) est montée fixe sur la section (3A, 3B) correspondante.

8. Machine agricole selon l'une quelconque des revendications 1 à 7, ***caractérisée en ce que*** les sections (3A, 3B) sont dépourvues de roues d'appui.

9. Machine agricole selon l'une quelconque des revendications 1 à 8, ***caractérisée en ce que*** au moins une des barres de semis (12) est divisée en au moins deux tronçons (12A, 12B, 12C), chaque tronçon (12A, 12B, 12C) est monté par l'intermédiaire d'un vérin (20).

10. Machine agricole selon l'une quelconque des revendications 1 à 9, ***caractérisée en ce que*** les deux sections (3A, 3B) pivotent autour de la première articulation (8) vers l'avant pour arriver dans la position de transport.

11. Machine agricole selon l'une quelconque des revendications 1 à 10, ***caractérisée en ce que*** le dispositif de semis (10) est un semoir à distribution mécanique ou un semoir à distribution pneumatique.

## Patentansprüche

1. Landwirtschaftliche Maschine (1) mit einem Anhängerahmen (2) und einem Querbalken (3) in mehreren Abschnitten, die in Arbeitstellung im Wesentlichen quer zur Vorschubrichtung (A) und in Transportstellung im Wesentlichen parallel zur Vorschubrichtung (A) verlaufen, wobei der Querbalken zwei Abschnitte (3A, 3B) aufweist, die um ein erstes jeweiliges Gelenk (8) mit einer im Wesentlichen vertikalen Achse klappbar sind, wobei jeder Abschnitt (3A, 3B) eine Sävorrichtung (10), die aus einem Trichter (11) und einem Säbalken (12) gebildet ist, trägt, ***dadurch gekennzeichnet, dass*** jeder Säbalken (12) mittels eines zweiten Gelenks (15) mit einer im Wesentlichen horizontalen Achse, das in Arbeitsstellung parallel zur Vorschubrichtung (A) verläuft, an dem entsprechenden Abschnitt (3A, 3B) befestigt ist, wobei nur der Säbalken (12) bezüglich des entsprechenden Abschnitts (3A, 3B) um das zweite Gelenk (15) beweglich ist.

2. Landwirtschaftliche Maschine nach Anspruch 1, ***dadurch gekennzeichnet, dass,*** wenn mindestens einer der Abschnitte (3A, 3B) in die Transportkonfiguration gebracht wird, der entsprechende Säbalken (12) sich im Wesentlichen parallel zur Bodenoberfläche erstreckt.

3. Landwirtschaftliche Maschine nach Anspruch 1 oder 2, ***dadurch gekennzeichnet, dass*** die Schwenkbewegung um das zweite Gelenk (15) in der Arbeitsstellung und in der Transportstellung frei ist.

4. Landwirtschaftliche Maschine nach irgend einem der Ansprüche 1 bis 3, ***dadurch gekennzeichnet, dass*** das zweite Gelenk (15) bezüglich der Position des Schwerpunkts des Säbalkens (12) seitlich versetzt ist.

5. Landwirtschaftliche Maschine nach irgend einem der Ansprüche 1 bis 4, ***dadurch gekennzeichnet, dass*** sich das zweite Gelenk (15) zwischen der Vertikalebene (17), die durch den Schwerpunkt des Säbalkens (12) verläuft, und dem äusseren Ende des Säbalkens (12) erstreckt.

6. Landwirtschaftliche Maschine nach irgend einem der Ansprüche 1 bis 5, ***dadurch gekennzeichnet, dass*** das zweite Gelenk (15) direkt in dem entsprechenden Abschnitt (3A, 3B) ausgeführt ist.

7. Landwirtschaftliche Maschine nach irgend einem der Ansprüche 1 bis 6, ***dadurch gekennzeichnet, dass*** der Trichter (11) fest an dem entsprechenden Abschnitt (3A, 3B) befestigt ist.

8. Landwirtschaftliche Maschine nach irgend einem der Ansprüche 1 bis 7, ***dadurch gekennzeichnet, dass*** die Abschnitte (3A, 3B) keine Stützräder enthalten.

9. Landwirtschaftliche Maschine nach irgend einem der Ansprüche 1 bis 8, ***dadurch gekennzeichnet, dass*** mindestens einer der Säbalken (12) in mindestens zwei Abschnitte (12A, 12B, 12C) geteilt ist, dass jeder Abschnitt (12A, 12B, 12C) mittels eines Zylinders (20) angebracht wird.

10. Landwirtschaftliche Maschine nach irgend einem der Ansprüche 1 bis 9, ***dadurch gekennzeichnet, dass*** die zwei Abschnitte (3A, 3B) um das erste Gelenk (8) nach vorne schwenken, um in die Transportstellung zu gelangen.

11. Landwirtschaftliche Maschine nach irgend einem der Ansprüche 1 bis 10, ***dadurch gekennzeichnet, dass*** die Sävorrichtung (10) eine Sämaschine mit mechanischer oder pneumatischer Verteilung ist.

## Claims

1. Agricultural machine (1) having a trailed chassis (2) and a transverse bar (3) in several portions extending substantially transversely to the direction of advance (A) in the work position and extending substantially parallel to the direction of advance (A) in the transport position, the transverse bar includes two portions (3A, 3B) able to be folded around a first respective articulation (8) with a substantially vertical axis, each portion (3A, 3B) supports a seeder device (10) made up of a hopper (11) and a seeder bar (12), ***characterized in that*** each seeder bar (12) is fixed on the corresponding section (3A, 3B) using a second articulation (15) with a substantially horizontal axis oriented parallel to the direction of advance (A) in the work position, only the seeder bar (12) is movable relative to the corresponding section (3A, 3B) around the second articulation (15).

2. Agricultural machine according to claim 1, ***characterized in that*** when at least one of the portions (3A, 3B) is placed in the transport configuration, the corresponding seeder bar (12) extends substantially parallel to the surface of the ground.

3. Agricultural machine according to claim 1 or 2, ***characterized in that*** the pivoting around the second articulation (15) is free in the work position and the transport position.

4. Agricultural machine according to any one of claims 1 to 3, ***characterized in that*** the second articulation (15) is laterally offset relative to the position of the center of gravity of the seeder bar (12).

5. Agricultural machine according to any one of claims 1 to 4, ***characterized in that*** the second articulation (15) extends between the vertical plane (17) passing through the center of gravity of the seeder bar (12) and the outer end of the seeder bar (12).

6. Agricultural machine according to any one of claims 1 to 5, ***characterized in that*** the second articulation (15) is produced directly in the corresponding portion (3A, 3B).

7. Agricultural machine according to any one of claims 1 to 6, ***characterized in that*** the hopper (11) is mounted fixed on the corresponding portion (3A, 3B).

8. Agricultural machine according to any one of claims 1 to 7, ***characterized in that*** the portions (3A, 3B) have no bearing wheels.

9. Agricultural machine according to any one of claims 1 to 8, ***characterized in that*** at least one of the seeder bars (12) is divided into at least two sections (12A, 12B, 12C), each section (12A, 12B, 12C) is mounted using a cylinder (20).

10. Agricultural machine according to any one of claims 1 to 9, ***characterized in that*** the two portions (3A, 2B) pivot around the first articulation (8) toward the front to arrive in the transport position.

11. Agricultural machine according to any one of claims 1 to 10, ***characterized in that*** the seeder device (10) is a seeder with mechanical distribution or a seeder with pneumatic distribution.
